# EUROPÄISCHE PATENTSCHRIFT

(11) **EP 2 254 762 B1**
(45) Veröffentlichungstag und Bekanntmachung des Hinweises auf die Patenterteilung: **19.10.2016**
(21) Anmeldenummer: 09719036.7
(22) Anmeldetag: 28.01.2009
(51) Int. Cl.: B60G 15/06, B60G 15/07, B60G 17/015, B60G 17/02

(54) **RADAUFHÄNGUNG FÜR GELENKTE RÄDER VON KRAFTFAHRZEUGEN**
WHEEL SUSPENSION FOR STEERED WHEELS OF MOTOR VEHICLES
SUSPENSION DE ROUE POUR LES ROUES DIRECTRICES DE VÉHICULES À MOTEUR

(30) Priorität: 12.03.2008 DE 102008013913
(43) Veröffentlichungstag der Anmeldung: 01.12.2010
(73) Patentinhaber: Audi AG, 85045 Ingolstadt (DE)
(72) Erfinder: MICHEL, Wilfried, 93339 Riedenburg (DE)
(74) Vertreter: Asch, Konrad
(86) Internationale Anmeldenummer: PCT/EP2009/000519
(87) Internationale Veröffentlichungsnummer: WO 2009/112126

(56) Entgegenhaltungen:
- EP-A- 0 840 030
- WO-A-2006/012858
- DE-A1- 10 237 644
- DE-A1- 19 510 032
- DE-A1- 19 955 410
- DE-A1-102005 001 737
- DE-A1-102005 001 742
- DE-C1- 10 101 694
- FR-A- 2 840 257
- JP-A- 11 108 100
- US-A- 5 553 836
- US-A1- 2007 210 539

## Beschreibung

Die Erfindung betrifft eine Radaufhängung für gelenkte Räder von Kraftfahrzeugen gemäß dem Oberbegriff des Patentanspruches 1.

Derartige Radaufhängungen für gelenkte Räder von Kraftfahrzeugen sind vielfach unter der Bezeichnung McPherson-Vorderachse bekannt, mit der Eigenschaft eines radführenden Teleskop-Stoßdämpfers, dessen Dämpferrohr mit dem Radträger fest verbunden ist und dessen Kolbenstange aufbauseitig angelenkt ist. Die Lenkachse der Radaufhängung definiert sich dabei durch den oberen Anlenkpunkt der Kolbenstange und den unteren Anlenkpunkt des Radträgers an einem Querlenker.

Der Stoßdämpfer ist bei der McPherson-Vorderachse radführend, das heißt die Radaufstandskraft übt einen Moment auf die Kolbenstange und damit auf das gesamte Dämpfersystem aus. Die aus den Radaufstandskräften resultierenden Querkräfte auf die Stoßdämpferführungen werden ausgeglichen durch die Desaxierung von Feder- und Dämpferachse, das heißt einer asymmetrischen Schiefstellung der Schraubendruckfeder zur Stoßdämpfermittelachse. Die Schraubendruckfeder ist an ihrem oberen, aufbauseitigen Federteller über ein Axialwälzlager abgestützt und dreht somit bei Lenkbewegungen der Räder mit dem Radträger und dem Dämpferrohr des Stoßdämpfers mit. Ferner ist z.B. durch die DE 10 2005 001 742 A1 eine Radaufhängung mit einer Höhenverstellvorrichtung bekannt, bei der um die Kolbenstange des Stoßfämpfers herum ein elektromotorischer Aktuator mit einem Schraubtrieb bzw. einem Kugelgewindetrieb und einem ringförmigen Elektromotor angeordnet ist. Die Stellmutter des Schraubtriebes wirkt unmittelbar auf den oberen Federteller der zentrisch angeordneten Schraubendruckfeder.

Problematisch ist es, wenn sich hier, wie auch bei der obigen McPherson-Vorderachse, der Stoßfämper und die Schraubendruckfeder bei einem Radeinschlag mitdrehen. Dies hat zur Folge, dass bei der Lenkbewegung der Räder sich die Stellmutter relativ zum übrigen Aktuator verdrehen und ungewollt eine Höhenverstellung bewirken würde.

Nach der DE 10 2005 001 737 A1 ergibt sich, dass bei der Lenkbewegung der Räder die Stellmutter relativ zum übrigen Aktuator verdreht und ungewollt eine Höhenverstellung bewirken kann. Die DE 10 2005 001 737 A1 ist gattungsbildend. Auch die FR-A-2 840 257 und DE 102 37 644 A1 vermitteln keine Hinweise, den aus der DE 10 2005 001 737 A1 bekannten Höhenverstell-Aktuator so anzupassen, dass beim Einbau in eine lenkbare Fahrzeug-Vorderachse die genannten Nachteile des Standes der Technik vermieden werden.

Aufgabe der Erfindung ist es, eine Radaufhängung für gelenkte Räder von Kraftfahrzeugen gemäß dem Gattungsbegriff vorzuschlagen, die unter Integration einer Höhenverstellvorrichtung querkraftfrei und mit präziser Höhenverstellung bei schwingungstechnisch günstiger Krafteinleitung in den Aufbau eine ungewollte Höhenverstellung verhindert.

Diese Aufgabe wird erfindungsgemäß mit den kennzeichnenden Merkmalen des Patentanspruches 1 gelöst. Vorteilhafte Weiterbildungen der Erfindung beinhalten die Unteransprüche.

Erfindungsgemäß wird vorgeschlagen, dass die Stellmutter des Aktuators unter Zwischenschaltung des Axialwälzlagers auf der Schraubendruckfeder wirkt und der untere Federteller mit dem Dämpferrohr fest verbunden ist. Durch dieses Merkmal wird erreicht, dass bei Lenkbewegungen die mitdrehende Schraubendruckfeder von der Stellmutter entkoppelt ist, also keine ungewollten Höhenverstellungen auftreten. Andererseits kann der gesamte Aktuator einschließlich des Elektromotors bei den Lenkbewegungen überlagerten, kinematisch bedingten Schwenkbewegungen des gesamten Federbeines mitschwenken und unterliegt dadurch keinerlei Verspannungen.

In besonders vorteilhafter Weiterbildung der Erfindung können die Drehachse der rotationssymmentrischen Spindel des Aktuators und die Mittelachse der Stellmutter von der Mittelachse der Schraubendruckfeder abweichen. Dies schließt wirksam durch die Desaxierung der Schraubendruckfeder auftretende Querkräfte und Lagerverspannungen aus.

Des Weiteren kann der Elektromotor des Aktuators außerhalb der Schraubendruckfeder und koaxial zu dieser angeordnet sein und die Spindel über einen Zahntrieb oder durch ein Zwischenrad antreiben. Damit kann ein baulich einfacher, kostengünstiger Elektromotor verwendet werden, der zudem an den vorhandenen Einbauraum unter Berücksichtigung auftretender Schwenkbewegungen anpassbar ist.

Der Elektromotor kann bevorzugt über ein Zahnritzel und ein Zwischenzahnrad auf eine Außenverzahnung an der Spindel wirken. Es könnte aber auch ein Zahnriemen anstelle eines Zwischenzahnrades verwendet sein.

Ferner kann das Basisteil baulich und fertigungstechnisch günstig eine den Elektromotor tragende Lagerplatte aufweisen, an der auch das Zwischenzahnrad drehbar gelagert ist.

Das Basisteil kann in baulich gedrängter Konzeption mit einer nach unten abragenden, rotationssymmetrischen Führungshülse versehen sein, auf der die Spindel axial unverschiebbar drehgelagert ist und die einen Zwischenboden aufweist, an dem die Kolbenstange des Stoßdämpfers befestigt ist.

Zur Erzielung einer wirkungsvollen Schwingungsdämpfung kann ferner die Stellmutter mit dem angeformten Federteller über einen gummielastischen Dämpfungsring und das Axialwälzlager auf die Schraubendruckfeder wirken.

Ist das Dämpferlager zwischen der Lagerplatte und einer mit dem Aufbau verbindbaren Basisplatte des Basisteils angeordnet, so kann das gesamte Federbein mit angebautem Aktuator als Vormontageeinheit hergestellt und in einfacher Weise montagegünstig in das Kraftfahrzeug eingebaut werden.

In an sich bekannter Weise kann der Schraubtrieb ein Kugelgewindetrieb mit zwischen der Spindel und der Stellmutter in Kugelbahnen geführten Kugeln sein, der sich durch eine besonders leichtgängige Betätigung und eine verschleißarme, robuste Aufnahme der Stellkräfte auszeichnet.

Schließlich kann in vorteilhafter Weise die Stellmutter über einen radial nach innen ragenden Führungsring in Umfangsrichtung formschlüssig auf einem nach unten abragenden Abschnitt der Führungshülse verschiebbar geführt sein, so dass die Stellmutter fertigungstechnisch einfach zwar axial verschiebbar, aber unverdrehbar geführt ist.

Ein Ausführungsbeispiel der Erfindung ist im Folgenden mit weiteren Einzelheiten näher erläutert. Die schematische Zeichnung zeigt in:
- Fig. 1: eine dem Stand der Technik entsprechende McPherson-Radaufhängung für gelenkte Räder von Kraftfahrzeugen, in einer Ansicht entgegen der Fahrtrichtung; und
- Fig. 2: einen Schnitt entlang der Linie II - II der Fig. 1 durch eine mit einer Höhenverstellvorrichtung mit einem elektromotorischen Aktuator versehene, modifizierte McPherson Radaufhängung.

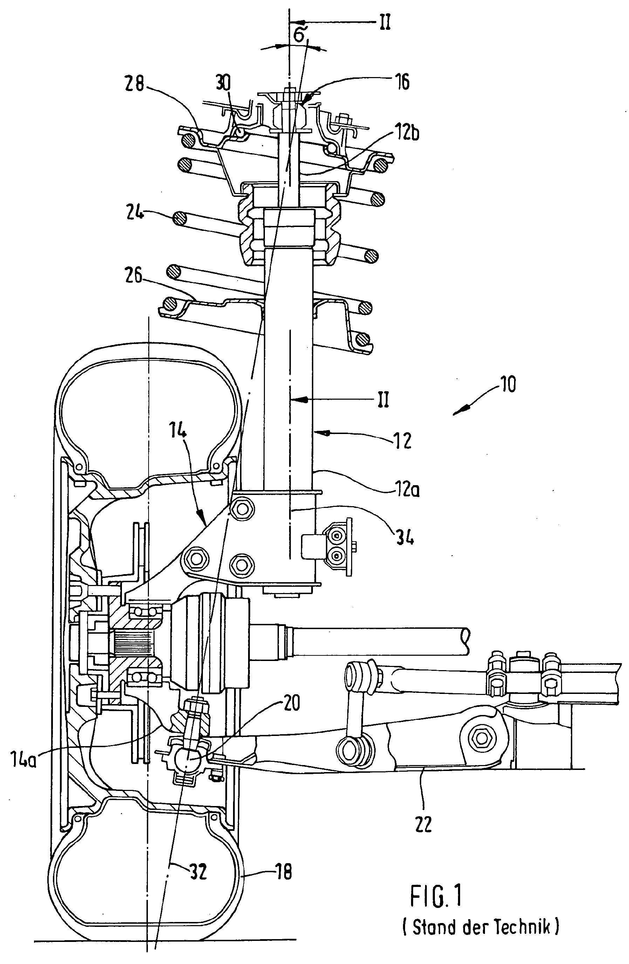

Die in der **Fig. 1** dargestellte, dem Stand der Technik entsprechende McPherson-Radaufhängung 10 ist nur soweit beschrieben, als dies für das Verständnis der vorliegenden Erfindung erforderlich ist.

Die Radaufhängung 10 weist einen Teleskop-Stoßdämpfer 12 auf, dessen Dämpferrohr 12a mit einem Radträger 14 fest verbunden ist. Die feste Verbindung des Teleskop-Stoßdämpfers 12 mit dem Radträger 14 ist im Sinne einer starren, lagerfreien Verbindung zwischen beiden Bauteilen zu verstehen. Die nach oben ragende Kolbenstange 12b des Stoßdämpfers 12 ist über ein gummielastisches Dämpferlager 16 an dem Aufbau (nicht dargestellt) des Kraftfahrzeuges angelenkt.

Auf dem Radträger 14 ist das Rad 18 des Kraftfahrzeuges drehbar gelagert. Ferner ist der Radträger 14 mit einem unteren Arm 14a über ein Kugelgelenk 20 an einem unteren Querlenker 22 der Radaufhängung 10 angebunden. Die an einem Lenkarm (nicht ersichtlich) des Radträgers 14 angelenkte Lenkeinrichtung des Kraftfahrzeuges (z. B. eine Zahnstangenlenkung) ist nicht dargestellt.

Um den Stoßdämpfer 12 herum ist als Tragfeder eine Schraubendruckfeder 24 angeordnet, die einerseits über einen unteren Federteller 26 und andererseits an einem oberen Federteller 28 abgestützt ist. Der Federteller 26 ist dabei an dem Dämpferrohr 12a befestigt, während der obere Federteller 28 über ein Axialwälzlager 30 ebenfalls an dem Dämpferlager 16 angebunden ist.

Die Lenkachse 32 der Radaufhängung 10 definiert sich wie ersichtlich durch die Mittelpunkte des Kugelgelenkes 20 am Radträger 14 und den oberen Anlenkpunkt am Dämpferlager 16, über die das Rad 18 bei Lenkbewegungen verschwenkt wird.

Die Stoßdämpfer-Mittelachse 34 hingegen liegt deutlich innerhalb der Lenkachse 32, um den erforderlichen Freigang des Rades 18 sicherzustellen.

Daraus resultiert, dass aufgrund der statischen und dynamischen Radlasten an den Stoßdämpferführungen (Führungen der Kolbenstange 12b in dem Dämpferrohr 12a - nicht ersichtlich) Querkräfte und Biegemomente auftreten würden, die jedoch durch die Schrägstellung und/oder Desaxierung der Schraubendruckfeder 24 kompensiert werden. Die Mittelachse der Schraubendruckfeder 24 fällt dabei im Wesentlichen mit der Lenkachse 34 zusammen. Dies wird wie ersichtlich erreicht durch die asymmetrische Konfiguration und Anbindung der Federteller 26, 28 an dem Dämpferrohr 12a bzw. an dem Dämpferlager 16.

Generell ist die Übernahme einer aus dem Stand der Technik bekannten Höhenverstellvorrichtung in die McPherson-Radaufhängung 10 aufgrund der Desaxierung, das heißt der unterschiedlich ausgerichteten Dämpfer- und Federachsen, problematisch. Der Hubweg würde sich in einem solchen Fall entlang der Stoßdämpfer-Mittelachse 34 verändern, die jedoch nicht identisch ist mit der Federachse. Aufgrund der geometrischen Gegebenheiten würde sich bei dieser Art der Verstellung die Desaxierung stark ändern, das heißt der Winkel zwischen Feder- und Dämpferachse würde sich unzulässig ändern, wodurch der Querkraftausgleich zunichte gemacht werden würde. Zudem würden durch die extrem schrägstehende Federachse sehr große Querkräfte auf den Aktuator wirken.

Zwar ergäbe sich rein theoretisch die Möglichkeit, die Aktuatorenachse gegenüber der Stoßdämpfer-Mittelachse 34 schräg zu stellen, damit die Aktuatorenachse mit der Federachse zusammenfiele. Damit müsste aber der Aktuator im Durchmesser entsprechend erweitert werden. Der Aktuator würde sich zudem nach unten, also im Bereich unterhalb des unteren Federtellers 26, erstrecken. Dies lässt jedoch der Reifenfreigang nicht zu.

Alternativ müsste ein Höhenverstell-Aktuator zwangsläufig im Karosseriedom untergebracht werden und zudem die Schwenkbewegung des Federbeines mitmachen. Denn würde man beispielsweise den im Federbeindom angeordneten Höhenversteller ohne Axiallager ausführen, so würde der eine Teil stillstehen, der andere jedoch mitschwenken. Die Folge wäre eine Höhenauswanderung des Fahrzeugaufbaus, und zwar hervorgerufen durch die Steigung des Kugelgewindetriebes über den Radeinschlag, und außerdem erhöhter Verschleiß am Kugelgewindetrieb.

In Abkehr zu den oben angedeuteten Lösungsvorschlägen zur Übernahme einer Höhenverstellung bei der McPherson-Vorderachse beruht die erfindungsgemäße Höhenverstellung am McPherson-Federbein auf der nachfolgend beschriebenen Tatsache, den Aktuator mit einem Axialwälzlager 30 zu kombinieren und ihn über ein angeformtes Gummimetalllager 72 nicht nur radial, sondern auch kardanisch mit dem gesamten Federbein mitschwenken zu lassen.

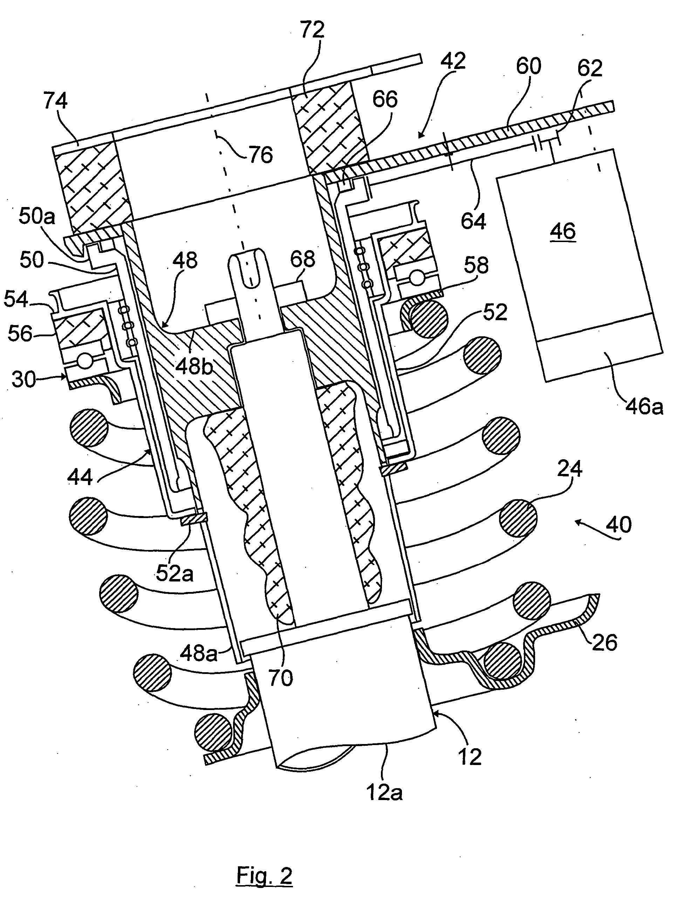

Die **Fig. 2** zeigt in einer in der Fig. 1 angezeigten Schnittansicht eine modifizierte McPherson-Radaufhängung 40 mit einem elektromotorischen Aktuator 42 zur Höhenverstellung des Aufbaus des Kraftfahrzeuges z. B. in eine Normalstellung, eine tiefer liegende Sportstellung und eine höher liegende Geländestellung. Soweit nicht dargestellt ist die Radaufhängung 40 der Radaufhängung 10 gemäß Fig. 1 konform. Im Wesentlichen gleiche Teile sind mit gleichen Bezugszeichen versehen.

Der elektromotorische Aktuator 42 setzt sich im Wesentlichen zusammen aus einem Schraubtrieb bzw. Kugelgewindetrieb 44 und einem antreibenden Elektromotor 46.

Der Kugelgewindetrieb 44 ist um die Kolbenstange 12b und das Dämpferrohr 12a des Stoßdämpfers 12 herum angeordnet und weist eine drehbar auf einer Führungshülse 48 geführte, rohrförmige Spindel 50 und eine ebenfalls rohrförmige, rotationssymmetrische Stellmutter 52 auf, die über gewindeähnliche Kugelbahnen und dazwischen angeordnete Kugeln (nur angedeutet) trieblich miteinander verbunden sind. Bei einer Verdrehung der Spindel 50 wird die Stellmutter 52 entsprechend axial verstellt, wobei die Stellmutter 52 über radial nach innen ragenden Führungselemente 52a in Axialnuten eines nach unten abragenden Abschnittes 48a der Führungshülse 48 unverdrehbar geführt ist.

An die Stellmutter 52 ist der obere Federteller 54 angeformt, an dem sich die Schraubendruckfeder 24 unter Zwischenschaltung eines gummielastischen Dämpfungsringes 56 und des Axialwälzlagers 30 sowie eines Zwischenringes 58 abstützt.

Die Führungshülse 48 ist fest mit einer Lagerplatte 60 verbunden, an der der seitlich neben der Schraubendruckfeder 24 angeordnete Elektromotor 46 befestigt ist. Der Elektromotor 46 treibt über ein Antriebsritzel 62 und ein ebenfalls an der Lagerplatte 60 drehbar gelagertes Zwischenzahnrad 64 die Spindel 50 an, die dazu mit einer Außenverzahnung 50a versehen ist. Ferner ist zwischen der Spindel 50 und der Lagerplatte 60 ein Axialwälzlager 66 zur Abstützung der axial wirkenden Kräfte der Schraubendruckfeder 24 eingesetzt.

Die Kolbenstange 12b des Stoßdämpfers 12 ist an einem Zwischenboden 48b der Führungshülse 48 mittels einer Gewindeverbindung 68 befestigt. An dem Zwischenboden 48b ist auch wie ersichtlich eine gummielastische Zusatzfeder 70 angeordnet.

An die Lagerplatte 60 ist ein Dämpfungslager 72 mit einer Basisplatte 74 angebaut, über das die gesamte Radaufhängung 40 mit dem Aufbau des Kraftfahrzeuges verbindbar ist.

Der Kugelgewindetrieb 44 ist so um den Stoßdämpfer 12 herum ausgerichtet, dass dessen Drehachse 76 im Wesentlichen mit der Lenkachse 32 bzw. der entsprechenden Federmittelachse zusammenfällt. Dieser Versatz zum Ausgleich von Querkräften und Biegemomenten ist in der um 90 Grad zur Fig. 1 versetzten Schnittansicht der **Fig. 2** nicht ersichtlich.

Zur Höhenverstellung des Aufbaus des Kraftfahrzeuges wird der Elektromotor 46 des Aktuators 42 angesteuert und verdreht die Spindel 50 des Kugelgewindetriebes 44, wodurch die Stellmutter 52 entsprechend axial verschoben wird und die Schraubendruckfeder 24 über den Federteller 54 mehr oder weniger vorspannt. Die eingestellte Position wird durch eine im Elektromotor 46 vorgesehene Bremse 46a gehalten.

Bei einer Lenkbewegung des Rades 18 mit entsprechendem Verschwenken des Radträgers 14 und Verdrehen des Dämpferrohres 12a des Stoßdämpfers 12 wird aufgrund der beschriebenen Anordnung auch die Schraubendruckfeder 24 mit dem unteren Federteller 26 und dem oberen Zwischenring 58 verdreht, während die Stellmutter 52 mit dem Federteller 54 durch das Axialwälzlager 30 entkoppelt ist. Lenkbewegungen bewirken also keine Verdrehung der Stellmutter 52 des Kugelgewindetriebes 44.

Das gesamte, in der Fig. 2 gezeigte Federbein kann daher nach wie vor mitsamt der Feder 24 und dem Zwischenring 58 über den Radeinschlag gegenüber der Karosserie und dem Aktuator 42 selbst mitschwenken. Die Desaxierung von Feder- und Dämpferachse bleibt dabei nach wie vor auch bei einer Niveauverstellung nahezu unverändert erhalten. Damit bleibt auch der Querkraftausgleich weitestgehend erhalten und gleichzeitig ist ein Reifenfreigang gewährleistet. Insbesondere erfolgt jedoch mit dem erfindungsgemäßen Aktuator 42 keine Höhenänderung des Fahrzeugaufbaus bei einem Radeinschlag, da aufgrund des Axialwälzlagers 30 der Kugelgewindetrieb 44 sich nicht verstellt.

Die bei einer Lenkbewegung aufgrund der kinematischen Eigenschaften der gesamten Radaufhängung 10 bzw. 40 auftretenden Verlagerungen und Schwenkbewegungen des Stoßdämpfers 12 und der Schraubendruckfeder 24 um den oberen Anlenkpunkt des in den Aktuator 42 integrierten Dämpferlagers 72 werden über das Dämpferlager 72 ausgeglichen, das eine kardanische Nachgiebigkeit bzw. Auswanderung des gesamten Aktuators 42 ermöglicht. Damit werden unerwünschte Verspannungen und Biegemomente von dem Aktuator und insbesondere von dem Kugelgewindetrieb 44 ferngehalten.

## Patentansprüche

1. Radaufhängung für gelenkte Räder von Kraftfahrzeugen, mit einem mit einem Radträger (14) fest verbundenen Teleskop-Stoßdämpfer (12) und einer diesen umgebenden Schraubendruckfeder (24), die zwischen einem unteren Federteller (26) und einem oberen, aufbauseitigen Federteller (54) eingespannt ist, wobei zur Höhenverstellung des Aufbaus um den Stoßdämpfer (12) herum ein Aktuator (42) vorgesehen ist, der eine, vorzugsweise über einen Elektromotor (46) angetriebene Spindel (50) und eine höhenverstellbare Stellmutter (52) aufweist, **dadurch gekennzeichnet, dass** die Stellmutter (52) des Aktuators (42) unter Zwischenschaltung eines Axialwälzlagers (30) auf die Schraubendruckfeder (24) wirkt und der untere Federteller (26) mit dem Dämpferrohr (12a) fest verbunden ist.

2. Radaufhängung nach Anspruch 1, **dadurch gekennzeichnet, dass** die Federmittelachse in Schiefstellung zur Stoßfängermittelachse (34) positioniert ist.

3. Radaufhängung nach einem der vorhergehenden Ansprüche, **dadurch gekennzeichnet, dass** die Radaufhängung ein gummielastischen Dämpferlager (72) zwischen der Kolbenstange (12b) des Stoßdämpfers (12) und dem Aufbau des Kraftfahrzeuges aufweist.

4. Radaufhängung nach einem der vorhergehenden Ansprüche, **dadurch gekennzeichnet, dass** die Drehlagerung der Spindel (50) und die Halterung des Elektromotors (46) über ein Basisteil (48, 60, 74) erfolgt, an dem die Kolbenstange (12b) befestigt ist.

5. Radaufhängung nach Anspruch 4, **dadurch gekennzeichnet, dass** das Basisteil (48, 60) über das gummielastische Dämpferlager (72) am Aufbau abgestützt ist.

6. Radaufhängung nach einem der vorhergehenden Ansprüche, **dadurch gekennzeichnet, dass** die Drehachse (76) der bevorzugt rotationssymmetrischen Spindel (50) des Aktuators (42) und die Mittelachse (76) der Stellmutter (52) im Wesentlichen mit der Lenkachse (32) bzw. der Federmittelachse (34) zusammenfallen.

7. Radaufhängung nach einem der vorhergehenden Ansprüche, **dadurch gekennzeichnet, dass** der Elektromotor (46) des Aktuators (42) außerhalb der Schraubendruckfeder (24) und koaxial zu dieser angeordnet ist und die Spindel (50) über einen Zahntrieb (62, 64, 50a) antreibt.

8. Radaufhängung nach einem der vorhergehenden Ansprüche, **dadurch gekennzeichnet, dass** die Stellmutter (52) über ein radial nach innen ragendes Führungselement (52a) in Umfangsrichtung formschlüssig auf einem nach unten abragenden Abschnitt (48a) der Führungshülse (48) verschiebbar geführt ist.

9. Radaufhängung nach Anspruch 7 oder 8, **dadurch gekennzeichnet, dass** der Elektromotor (46) über ein Zahnritzel (62) und ein Zwischenzahnrad (64) auf eine Außenverzahnung (50a) an der Spindel (50) wirkt.

10. Radaufhängung nach einem der Ansprüche 4 bis 9, **dadurch gekennzeichnet, dass** das Basisteil (48, 60, 74) eine den Elektromotor (46) tragende Lagerplatte (60) aufweist, an der auch das Zwischenzahnrad (64) drehbar gelagert ist.

11. Radaufhängung nach einem der vorhergehenden Ansprüche, **dadurch gekennzeichnet, dass** das Basisteil (48, 60, 74) mit einer nach unten abragenden, rotationssymmetrischen Führungshülse (48) versehen ist, auf der die Spindel (50) axial unverschiebbar drehgelagert ist und die einen Zwischenboden (48b) aufweist, an dem die Kolbenstange (12b) des Stoßdämpfers (12) befestigt ist.

12. Radaufhängung nach einem der vorhergehenden Ansprüche, **dadurch gekennzeichnet, dass** die Stellmutter (52) mit dem angeformten Federteller (54) über einen gummielastischen Dämpfungsring (56) und das Axialwälzlager (30) auf die Schraubendruckfeder (24) wirkt.

13. Radaufhängung nach einem der Ansprüche 3 bis 12, **dadurch gekennzeichnet, dass** das Dämpferlager (72) zwischen der Lagerplatte (60) und einer mit dem Aufbau verbindbaren Basisplatte (74) des Basisteils (48, 60, 74) angeordnet ist.

14. Radaufhängung nach einem der vorhergehenden Ansprüche, **dadurch gekennzeichnet, dass** der Stelltrieb ein Kugelgewindetrieb (44) mit zwischen der Spindel (50) und der Stellmutter (52) in Kugelbahnen geführten Kugeln ist.

## Claims

1. Suspension for motor vehicle steered wheels, comprising a telescopic shock absorber (12) fixed to a wheel carrier (14), and a helical compression spring (24), clamped between a lower spring plate (26) and an upper spring plate (54) mounted on the vehicle body, wherein an actuator (42) is provided around the shock absorber (12) for vertically adjusting the vehicle body, comprising a spindle (50), preferably driven by an electric motor (46) and a height-adjustable adjusting nut (52), **characterised in that** the adjusting nut (52) of the actuator (42) acts on the helical compression spring (24) via an axial antifriction bearing (30), and the lower spring plate (26) is fixed to the shock absorber tube (12a).

2. Wheel suspension according to claim 1, **characterised in that** the spring centre axis is positioned in oblique position to the centre axis of the bumper (34).

3. Wheel suspension according to one of the preceding claims, **characterised in that** the wheel suspension comprises a rubber-elastic damper bearing (72) between the piston rod (12b) of the shock absorber (12) and the body of the motor vehicle.

4. Wheel suspension according to one of the preceding claims, **characterised in that** the rotary bearing of the spindle (50) and the bracket of the electric motor (46) are actuated on a base part (48, 60, 74), upon which the piston rod (12b) is fixed.

5. Wheel suspension according to claim 4, **characterised in that** the base part (48, 60) is supported on the vehicle body via the rubber-elastic damper bearing (72).

6. Wheel suspension according to one of the preceding claims, **characterised in that** the rotation axis (76) of the preferably rotationally symmetrical spindle (50) of the actuator (42) and the central axis (76) of the adjusting nut (52) are substantially aligned with the steering axis (32) or the spring centre axis (34) respectively.

7. Wheel suspension according to one of the preceding claims, **characterised in that** the electric motor (46) of the actuator (42) is outside the helical compression spring (24) and is arranged coaxially thereto, and the spindle (50) is driven via a gear drive (62, 64, 50a).

8. Wheel suspension according to one of the preceding claims, **characterised in that** the adjusting nut (52) travels via a radially inward-projecting guide element (52a) in a positive peripheral direction on a downward-projecting portion (48a) of the guide sleeve (48).

9. Wheel suspension according to claim 7 or 8, **characterised in that** the electric motor (46) acts on an outer toothing (50a) on the spindle (50) via a pinion (62) and an intermediate gear (64).

10. Wheel suspension according to one of claims 4 to 9, **characterised in that** the base part (48, 60, 74) comprises a bearing plate (60) supporting the electric motor (46), and on which the intermediate gear (64) is also rotatably supported.

11. Wheel suspension according to one of the preceding claims, **characterised in that** the base part (48, 60, 74) is mounted with a downwardly protruding, rotationally symmetrical guide sleeve (48), on which the spindle (50) is axially mounted in a rotatably non-displaceable manner and comprises an intermediate floor (48b) onto which the piston rod (12b) of the shock absorber (12) is fixed.

12. Wheel suspension according to one of the preceding claims, **characterised in that** the adjusting nut (52) acts with the integrally formed spring plate (54) on the helical compression spring (24) via a rubber-elastic damping ring (56) and the axial antifriction bearing (30).

13. Wheel suspension according to one of claims 3 to 12, **characterised in that** the damper bearing (72) is arranged between the bearing plate (60) and a chassis connecting base plate (74) of the base part (48, 60, 74).

14. Wheel suspension according to one of the preceding claims, **characterised in that** the forward drive is a ball screw drive (44) comprising balls travelling along ball tracks between the spindle (50) and the adjusting nut (52).

## Revendications

1. Suspension de roue pour des roues articulées de véhicules automobiles, avec un amortisseur de chocs télescopique (12) relié fixement à un support de roue (14) et un ressort de pression cylindrique (24) l'entourant qui est serré entre une coupelle de ressort (26) inférieure et une coupelle de ressort (54) supérieure côté carrosserie, dans laquelle un actionneur (42) est prévu pour le réglage en hauteur de la carrosserie autour de l'amortisseur de chocs (12), qui présente une broche (50) entraînée de préférence par un moteur électrique (46) et un écrou de réglage (52) réglable en hauteur, **caractérisée en ce que** l'écrou de réglage (52) de l'actionneur (42) agit sur le ressort de pression cylindrique (24) en intercalant un palier à roulement axial (30) et la coupelle de ressort (26) inférieure est fixement reliée au tube amortisseur (12a).

2. Suspension de roue selon la revendication 1, **caractérisée en ce que** l'axe médian de ressort est positionné en position inclinée par rapport à l'axe médian de parechocs (34).

3. Suspension de roue selon l'une quelconque des revendications précédentes, **caractérisé en ce que** la suspension de roue présente un palier amortisseur (72) élastique comme le caoutchouc entre la tige de piston (12b) de l'amortisseur de chocs (12) et la carrosserie du véhicule automobile.

4. Suspension de roue selon l'une quelconque des revendications précédentes, **caractérisée en ce que** le logement rotatif de la broche (50) et le support du moteur électrique (46) sont réalisés sur une partie de base (48, 60, 74), sur laquelle la tige de piston (12b) est fixée.

5. Suspension de roue selon la revendication 4, **caractérisé en ce que** la partie de base (48, 60) est en appui contre la carrosserie par le biais du palier amortisseur élastique comme le caoutchouc (72).

6. Suspension de roue selon l'une quelconque des revendications précédentes, **caractérisée en ce que** l'axe de rotation (76) de la broche (50) symétrique en rotation de préférence de l'actionneur (42) et l'axe médian (76) de l'écrou de réglage (52) coïncident sensiblement avec l'axe de direction (32) ou l'axe médian de ressort (34).

7. Suspension de roue selon l'une quelconque des revendications précédentes, **caractérisée en ce que** le moteur électrique (46) de l'actionneur (42) est agencé en dehors du ressort de pression cylindrique (24) et coaxialement à celui-ci et entraîne la broche (50) par le biais d'un mécanisme denté (62, 64, 50a).

8. Suspension de roue selon l'une quelconque des revendications précédentes, **caractérisée en ce que** l'écrou de réglage (52) est guidé de manière mobile par un élément de guidage (52a) dépassant radialement vers l'intérieur dans le sens périphérique à complémentarité de formes sur une section (48a) dépassant vers le bas de la douille de guidage (48).

9. Suspension de roue selon la revendication 7 ou 8, **caractérisée en ce que** le moteur électrique (46) agit par un pignon (62) et une roue dentée intermédiaire (64) sur une denture extérieure (50a) sur la broche (50).

10. Suspension de roue selon l'une quelconque des revendications 4 à 9, **caractérisée en ce que** la partie de base (48, 60, 74) présente une plaque de palier (60) portant le moteur électrique (46), sur laquelle la roue dentée intermédiaire (64) est aussi logée de manière rotative.

11. Suspension de roue selon l'une quelconque des revendications précédentes, **caractérisée en ce que** la partie de base (48, 60, 74) est pourvue d'une douille de guidage (48) symétrique en rotation, dépassant vers le bas, sur laquelle la broche (50) est logée en rotation de manière immobile axialement et qui présente un fond intermédiaire (48b), sur lequel la tige de piston (12b) de l'amortisseur de chocs (12) est fixée.

12. Suspension de roue selon l'une quelconque des revendications précédentes, **caractérisée en ce que** l'écrou de réglage (52) agit avec la coupelle de ressort (54) formée par le biais d'un anneau d'amortissement (56) élastique comme le caoutchouc et le palier à roulement axial (30) sur le ressort de pression cylindrique (24).

13. Suspension de roue selon l'une quelconque des revendications 3 à 12, **caractérisée en ce que** le palier amortisseur (72) est agencé entre la plaque de palier (60) et une plaque de base (74) pouvant être reliée à la carrosserie de la partie de base (48, 60, 74).

14. Suspension de roue selon l'une quelconque des revendications précédentes, **caractérisée en ce que** le mécanisme de réglage est un mécanisme fileté à billes (44) avec des billes guidées entre la broche (50) et l'écrou de réglage (52) dans des voies de billes.
